# EUROPEAN PATENT APPLICATION

(11) **EP 4 184 639 A1**
(43) Date of publication of application: **24.05.2023**
(21) Application number: 22829637.2
(22) Date of filing: 28.06.2022
(51) Int. Cl.: H01M 10/052

(54) **CATHODE ACTIVE MATERIAL FOR SULFIDE-BASED ALL-SOLID-STATE BATTERY**

(30) Priority: 27.09.2021 KR 20210127344
(71) Applicant: LG Energy Solution, Ltd., Seoul 07335 (KR)
(72) Inventor: LEE, Dae Jin, Daejeon 34122 (KR) (KR); KIM, Ji Young, Daejeon 34122 (KR) (KR); HAH, Hoe Jin, Daejeon 34122 (KR) (KR); CHOI, Lak Young, Daejeon 34122 (KR) (KR)
(74) Representative: Goddar, Heinz J.
(86) International application number: PCT/KR2022/009251
(87) International publication number: WO 2023/048367

(57) **Abstract**

The present invention relates to a positive electrode active material for an all-solid-state battery, wherein the positive electrode active material has a structure in which a shell containing metal sulfide particles having a specific size is adsorbed on a core surface containing a lithium metal oxide, so that there is an advantage in that the mobility of lithium ions is improved and high charge-discharge capacity can be realized because cracks that may be generated between the positive electrode active material and the solid electrolyte and reactivity therebetween are reduced.

## Description

### [Technical Field]

The present invention relates to a positive electrode active material for a sulfide-based all-solid-state battery.

The present application claims the benefit of priority based on Korean Patent Application No. 10-2021-0127344 dated September 27, 2021, and all contents published in the literature of the Korean patent application are incorporated as a part of this specification.

### [Background Art]

A lithium all-solid-state battery is a battery that can directly convert chemical energy into electrical energy by using a sulfide-based or oxide-based solid electrolyte and oxidizing or reducing lithium ions through an all-solid material. In particular, due to the advantages such as eco-friendliness, safety, and high energy density capacity storage, the problems of low energy density, high cost and toxicity, which are limitations of currently commercial lithium secondary batteries, can be solved by a sustainable secondary battery, and thus there is an increasing demand for the sustainable secondary battery.

However, the all-solid-state battery has problems such as irreversible properties due to interfacial side reactions between the sulfide-based or oxide-based solid electrolyte and the positive electrode during the charging and discharging reaction; and a decrease in battery capacity due to non-uniform distribution of electrode charges due to interfacial resistance and space-charge layer formation. In addition, the low ionic conductivity of the all-solid material itself hinders the commercialization of lithium all-solid-state batteries, which are next-generation batteries.

In order to solve these problems, positive electrode active materials using lithium metal sulfide or the like as a medium have been developed. However, the positive electrode active material, which has been developed to date, has a problem that, while charge-discharge performance and the like are greatly increased in terms of capacity as compared with an oxide-based positive electrode active material as a new positive electrode active material, the capacity retention rate at the time of charge and discharge is significantly lower than that of an existing oxide-based positive electrode active material or negative electrode active material.

In addition, although a technique has been developed in which a positive electrode active material is surface-treated with a metal oxide or the like to be applied to an all-solid-state battery, the effect of improving the charging and discharging performance is insignificant, or there is the effect of improving the charging and discharging performance, but there is a limitation that is unsuitable for commercialization due to the high cost of a raw material to be used.

### Related Art

Korean Patent Registration No. 10-1582394

### Summary

An object of the present disclosure is to provide a positive electrode active material for a sulfide-based all-solid-state battery in which the mobility of lithium ions is improved by preventing the occurrence of cracks that may be generated between the positive electrode active material and the solid electrolyte or the induction of side reactions therebetween.

In order to solve the above-mentioned problem,
in one embodiment, the present disclosure provides a positive electrode active material for an all-solid-state battery, including:
a core containing a lithium metal oxide represented by the following Chemical Formula 1; and
a shell adsorbed on the surface of the core and including metal sulfide (M²S) particles,
the metal sulfide particles have an average particle size of 0.1 nm to 40 nm,

   [Chemical Formula 1] Liₓ[Ni_{y}Co_{z}Mn_{w}M¹ᵥ]Oᵤ

   wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

In this case, the metal sulfide (M²S) particles may include a single metal sulfide containing Zn, Mn, Cu, Cr, Zr, Al, or Ti.

As an example, the metal sulfide (M²S) particles may be zinc sulfide (ZnS) particles.

In addition, the metal sulfide particles may be included in an amount of 0.1 to 2 wt% based on the total weight of the positive electrode active material.

In addition, the average particle size of the positive electrode active material may be 0.5 µm to 10 µm.

In addition, the shell including the metal sulfide particles may be adsorbed to an area of 60% or more based on the total area of the core.

Further, in one embodiment, the present invention provides a method of manufacturing a positive electrode active material for an all-solid-state battery, including:
preparing a mixture including a lithium metal oxide represented by the following Chemical Formula 1 and metal sulfide (M²S) particles; and
heat-treating the mixture;
the metal sulfide particles have an average particle size of 0.1 nm to 40 nm,

   [Chemical Formula 1] Liₓ[Ni_{y}Co_{z}Mn_{w}M¹ᵥ]Oᵤ

   wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

In this case, in the step of preparing the mixture, the mixture may include 0.1 to 2 wt% of metal sulfide based on the total weight of the lithium metal oxide.

In addition, the heat treatment may be performed at 300 °C to 500 °C, and may be performed in the presence of one or more inert gases of nitrogen gas and argon gas.

Further, in one embodiment, the present invention provides an all-solid-state lithium secondary battery, including:
a positive electrode including the positive electrode active material according to the present invention described above;
a negative electrode; and
a sulfide-based solid electrolyte disposed between the positive electrode and the negative electrode.

The sulfide-based solid electrolyte may include one or more selected from the group consisting of Li₂S-SiS₂, LiI-Li₂S-SiS₂, LiI-Li₂S-P₂S₅, LiI-Li₂S-B₂S₃ Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅.

### [Effects of the Invention]

The positive electrode active material for an all-solid battery according to the present invention has a structure in which a shell containing a metal sulfide particle having a specific size is adsorbed on surface of a core containing a lithium metal oxide, and thus there is an advantage in that cracks that may be generated between the positive electrode activated material and the solid electrolyte and reactivity therebetween are reduced, and thus the mobility of lithium ions is improved and high charging-discharging capacity can be realized.

### [Detailed Description of the Preferred Embodiments]

Since the present invention can have various changes and can have various embodiments, specific embodiments will be described in detail in the detailed description.

However, this is not intended to limit the present invention to specific embodiments, and it should be understood to include all modifications, equivalents and substitutes included in the spirit and scope of the present invention.

In the present invention, it is to be understood that the terms "include(s)" or "have(has)" and the like are intended to specify the presence of stated features, numbers, steps, operations, components, components or combinations thereof, but do not preclude the presence or addition of one or more other features or numbers, steps, operations, components and combinations thereof.

Further, in the present invention, when a portion of a layer, film, region, plate, etc. is described as being "on" another portion, it includes not only the case where the portion is "directly on" the other portion but also the case where there is still another portion therebetween. Conversely, where a portion of a layer, film, region, plate, etc. is described as being "under" another portion, this includes the case where there is still another portion therebetween as well as the case where the portion is "directly under" the other portion. Also, herein, being positioned "on" may include being positioned not only on top but also on the bottom.

In addition, in the present invention, "include(s) as a main component" refers to 50 wt% or more, 60 wt% or more, 70 wt% or more, 80 wt% or more, 90 wt% or more, 95 wt% or more, or 97.5 wt%, based on the total weight of the composition, such as a slurry, etc. or a specific component, and in some cases, when constituting the entire composition or specific component, that is, it may mean 100 wt%.

Hereinafter, the present invention will be described in more detail.

### Positive electrode active material for all-solid-state battery

In one embodiment, the present invention provides a positive electrode active material for an all-solid-state battery, including:
a core containing a lithium metal oxide; and
a shell adsorbed on the surface of the core and including metal sulfide (M²S) particles,

The average particle size of the metal sulfide particles is 0.1 nm to 40 nm

The positive electrode active material according to the present invention is used in a sulfide-based all-solid lithium secondary battery, and contains a lithium metal oxide that exhibits electrical activity during charging and discharging of the battery as a core, and has a structure in which metal sulfide (M²S) particles are adsorbed on the core surface to form a shell.

Here, the lithium metal oxide may be used without particular limitation as long as it is a lithium metal oxide that provides lithium ions by reacting reversibly during charging and discharging of the battery, but specifically, it may contain a lithium metal oxide represented by the following Chemical Formula 1:

[Chemical Formula 1] Liₓ[Ni_{y}Co_{z}Mn_{w}M¹ᵥ]Oᵤ

wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

The lithium metal oxide represented by Chemical Formula 1 may be an oxide containing a transition metal along with lithium, and may include nickel in a high content, among the transition metals. As an example, the lithium metal oxide may include one or more selected from the group consisting of LiNi_{0.9}Co_{0.05}Mn_{0.05}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}Co_{0.1}Mn_{0.1}Al_{0.1}O₂, and LiNi_{0.8}Co_{0.1}Mn_{0.05}Al_{0.05}O₂. The lithium metal oxide has an excellent effect of improving the charging and discharging capacity of the battery by containing nickel in a high content.

In addition, the core has a structure in which a shell containing metal sulfide (M²S) particles is adsorbed on the surface, thereby reducing the interfacial resistance between the positive electrode active material and the solid electrolyte, and since the ability to resist side reactions between the positive electrode active material and the solid electrolyte is improved and the loss of lithium ions can be suppressed, the electrical performance of the battery can be improved.

In this case, the metal sulfide (M²S) particles are sulfide particles containing a transition metal, and specifically, may be a single metal sulfide containing Zn, Mn, Cu, Cr, Zr, Al or Ti.

As an example, the metal sulfide (M²S) particles may be particles containing zinc sulfide (ZnS) as a main component. Particles containing zinc sulfide as a main component have high state stability compared to other metal sulfides, and thus there is an advantage that not only a side reaction can be effectively suppressed between the positive electrode active material and the sulfide-based solid electrolyte during charging and discharging of the battery, but also workability is good and economical.

In addition, the metal sulfide particles may be included in an amount of 0.1 to 2 wt%, based on the total weight of the positive electrode active material, specifically, 0.1 to 2 wt%; 0.1 to 1.5 wt%; 0.3 to 1.5 wt%; 0.5 to 1.5 wt%; 0.9 to 1.5 wt%; 0.3 to 0.9 wt%; or 0.1 to 1.2 wt%, based on the total weight of the positive electrode active material.

According to the present invention, by controlling the content of metal sulfide particles contained in the positive electrode active material to the above range, as the content of the metal sulfide particles is low, it is possible to prevent the surface of the lithium metal oxide from being sufficiently surrounded or the excess metal sulfide from being aggregated with each other and not being coated on the surface of the lithium metal oxide.

In addition, the positive electrode active material may have an average particle size of 0.5 µm to 10 µm, and in this case, metal sulfide particles positioned on the surface of the positive electrode active material may have an average particle size of 0.1 nm to 40 nm.

More specifically, the positive electrode active material has an average particle size of 0.5 µm to 8 µm; 0.5 µm to 6 µm; 0.5 µm to 5 µm; 0.5 µm to 4 µm; 5 µm to 9 µm; 1 µm to 4 µm; 2 µm to 4 µm; 4 µm to 7 µm; 0.5 µm to 3 µm; 1 µm to 3 µm; or 3 µm to 8 µm, and the average particle size of the metal sulfide particles positioned on the surface of the positive electrode active material may be 0.1 nm to 30 nm; 0.1 nm to 20 nm; 0.1 nm to 10 nm; 5 nm to 30 nm; 5 nm to 20 nm; 8 nm to 15 nm; or 4 nm to 15 nm.

The present invention can further improve the electrode activity of the positive electrode by controlling the average particle size of the positive electrode active material within the above range, and by controlling the average particle size of the metal sulfide particles surrounding the core to the above range, it is possible to effectively suppress side reactions at the interface with the solid electrolyte and prevent cracks that may occur in the surface of the positive electrode active material, while minimizing deterioration of the electrical activity of the lithium metal oxide of the core.

Furthermore, the shell including the metal sulfide particles may surround 60% or more of the entire surface of the core including the lithium metal oxide. Specifically, the metal sulfide particles may have a structure that is physically and uniformly adsorbed to the surface of the core including the lithium metal oxide rather than chemically bonded. Here, the area to which the metal sulfide is adsorbed may be 60% or more of the core surface area, and more specifically, 70% or more, 80% or more, 90% or more, 95% or more, or 98% or more. The present invention can effectively suppress the side reaction between the positive electrode active material and the solid electrolyte without using an excess of metal sulfide by controlling the area where the shell containing the metal sulfide particles is adsorbed on the surface of the core to the above ratio.

The positive electrode active material for an all-solid battery according to the present invention has a structure in which a shell containing a metal sulfide particle having a specific size is adsorbed on surface of a core containing a lithium metal oxide, and thus there is an advantage in that cracks that may be generated between the positive electrode activated material and the solid electrolyte and reactivity therebetween are reduced, and thus the mobility of lithium ions is improved and high charging-discharging capacity can be realized.

### Method of preparing positive electrode active material for all-solid-state battery

Further, in one embodiment, the present invention provides a method of preparing a positive electrode active material for an all-solid-state battery, including:
preparing a mixture including a lithium metal oxide represented by the following Chemical Formula 1 and metal sulfide (M²S) particles; and
heat-treating the mixture;
the metal sulfide particles have an average particle size of 0.1 nm to 40 nm,

   [Chemical Formula 1] Liₓ[Ni_{y}Co_{z}Mn_{w}M¹ᵥ]Oᵤ

   wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

The method of preparing a positive electrode active material for an all-solid-state battery according to the present invention may be performed by preparing a mixture including a lithium metal oxide represented by Chemical Formula 1 constituting a core and metal sulfide (M²S) particles constituting a shell, and heat-treating the mixture.

Conventionally, in the same method as the method of preparing the positive electrode active material in which the lithium metal oxide having electrical activity is used as the core and the shell containing the metal oxide is formed on the surface of the core, that is, a method in which a metal chloride for providing the 'metal (M²)' of the metal sulfide (M²S) and a sulfur raw material for providing sulfur (S) of the metallic sulfide are mixed with the lithium metal oxide, and from this, the shell including the metal sulfate (M²S) is formed at the surface, which is a core, of the lithium metal oxide, it is difficult to uniformly form the metal sulfide (M²S) particles having a uniform size on the core containing the lithium metal oxide. However, the method of preparing a positive electrode active material according to the present invention can easily prepare a positive active material in the form of a core-shell by directly and uniformly mixing a lithium metal oxide contained in the core and metal sulfide (M²S) particles contained in the shell, and heat-treating the resulting mixture.

In this case, the step of preparing a mixture by mixing a lithium metal oxide and metal sulfide particles may be performed using a dry mixer used in the art for mixing powders such as metal compounds; agitators; shakers such as orbital shakers; mortar mixers; a milling machine such as a planetary ball mill and the like, but is not limited thereto.

As an example, the step of preparing a mixture may be performed at a speed of 50 to 500 rpm for 1 kg of the mixture, for 0.1 to 10 hours, with a force of 1 to 100 kWh/1 kg using a planetary ball mill.

As another example, the step of preparing a mixture may be performed by mixing for 1 to 10 hours, specifically, 2 to 8 hours using a shaker.

In addition, in the mixture, the lithium metal oxide represented by Chemical Formula 1 may be an oxide containing a transition metal along with lithium, and may include nickel in a high content, among the transition metals. As an example, the lithium metal oxide may include one or more selected from the group consisting of LiNi_{0.9}Co_{0.05}Mn_{0.05}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}Co_{0.1}Mn_{0.1}Al_{0.1}O₂, and LiNi_{0.8}Co_{0.1}Mn_{0.05}Al_{0.05}O₂.

In addition, the metal sulfide (M²S) particles are sulfide particles containing a transition metal, and specifically, may be a single metal sulfide containing Zn, Mn, Cu, Cr, Zr, Al or Ti.

In addition, the average particle size of the metal sulfide (M²S) may be 0.1 nm to 30 nm; 0.1 nm to 20 nm; 0.1 nm to 10 nm; 5 nm to 30 nm; 5 nm to 20 nm; 8 nm to 15 nm; or 4 nm to 15 nm.

In addition, the mixture may include 0.1 to 2 wt% of a metal sulfide, based on the total weight of the lithium metal oxide, specifically, 0.1 to 2 wt%; 0.1 to 1.5 wt%; 0.3 to 1.5 wt%; 0.5 to 1.5 wt%; 0.9 to 1.5 wt%; 0.3 to 0.9 wt%; or 0.1 to 1.2 wt%, based on the total weight of the lithium metal oxide.

According to the present invention, by controlling the content of the metal sulfide mixed with the lithium metal oxide to the above range, as the content of the metal sulfide particles is low, it is possible to prevent the surface of the lithium metal oxide from being sufficiently surrounded or the excess metal sulfide from being aggregated with each other and not being coated on the surface of the lithium metal oxide.

In addition, the step of heat-treating the mixture containing the lithium metal oxide and the metal sulfide may be a step of fixing the metal sulfide physically adsorbed to the surface of the lithium metal oxide as the core.

In this case, the step of heat-treating the mixture may be performed under an inert gas condition using nitrogen gas, argon gas, or the like alone or in combination.

In addition, the heat treatment temperature may be 300 °C or more, preferably 300 °C to 480 °C; 350 °C to 500 °C; 400 °C to 500 °C; or 420 °C to 480 °C.

According to the present invention, the metal sulfide can be easily fixed to the surface of the lithium metal oxide as a core without a side reaction by adjusting the heat treatment temperature of the mixture including the lithium metal oxide and the metal sulfide to the above range.

The method of manufacturing a positive electrode active material for an all-solid-state battery according to the present invention can form a shell in which a metal sulfide is uniformly coated on the surface of a core containing a lithium metal oxide, so that the positive electrode active material having a core-shell structure has advantages in that the production efficiency is excellent, and the size of the metal sulfide is easily controlled to a nanometer level and processability is excellent.

### All-solid-state lithium secondary battery

Further, in one embodiment, the present invention provides an all-solid-state lithium secondary battery, including:
a positive electrode including the positive electrode active material according to the present invention described above;
a negative electrode; and
a sulfide-based solid electrolyte disposed between the positive electrode and the negative electrode.

Since the all-solid-state lithium secondary battery according to the present invention includes the positive electrode containing the positive electrode active material of the present invention as described above, cracks generated at the interface between the positive electrode active material and the solid electrolyte are significantly less, and side reactions are suppressed, so that the lithium ion mobility of the electrode can be excellent.

In this case, the positive electrode may have a structure in which a positive electrode mixture layer containing the positive electrode active material of the present invention described above is formed on a positive electrode current collector.

The positive electrode current collector is not particularly limited as long as it has high conductivity without causing a chemical change in the battery, and for example, stainless steel; aluminum; nickel; titanium; calcined carbon; or aluminum or stainless steel surface-treated with carbon, nickel, titanium, silver, etc. may be included.

In addition, the positive electrode mixture layer contains a positive electrode active material, a conductive material, a binder, and a solid electrolyte, and in some cases may further contain an additive.

Here, the positive electrode active material may have a structure including: a core containing a lithium metal oxide represented by the following Chemical Formula 1; and a shell adsorbed on the surface of the core and including metal sulfide (M²S) particles.

[Chemical Formula 1] Liₓ[Ni_{y}Co_{z}Mn_{w}M¹ᵥ]Oᵤ

wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

The lithium metal oxide is not particularly limited as long as it is a compound represented by Chemical Formula 1, but specifically, may include one or more selected from the group consisting of LiNi_{0.9}Co_{0.05}Mn_{0.05}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}Co_{0.1}Mn_{0.1}Al_{0.1}O₂, and LiNi_{0.8}Co_{0.1}Mn_{0.05}Al_{0.05}O₂.

In addition, the metal sulfide (M²S) particles are sulfide particles containing a transition metal, and specifically, may be a single metal sulfide containing Zn, Mn, Cu, Cr, Zr, Al or Ti.

In addition, the average particle size of the metal sulfide (M²S) may be 0.1 nm to 40 nm; 0.1 nm to 30 nm; 0.1 nm to 20 nm; 0.1 nm to 10 nm; 5 nm to 30 nm; 5 nm to 20 nm; 8 nm to 15 nm; or 4 nm to 15 nm.

In addition, the average particle size of the positive electrode active material may be 0.5 µm to 10 µm; 0.5 µm to 8 µm; 0.5 µm to 6 µm; 0.5 µm to 5 µm; 0.5 µm to 4 µm; 5 µm to 9 µm; 1 µm to 4 µm; 2 µm to 4 µm; 4 µm to 7 µm; 0.5 µm to 3 µm; 1 µm to 3 µm; or 0.5 µm to 2 µm.

In addition, the conductive material is not particularly limited as long as it has conductivity without causing a chemical change in the battery, but specifically, graphite, carbon-based materials, metal powders or metal fibers, needle-shaped or branched conductive whiskers, conductive metal oxides, conductive polymers, and any one or a mixture thereof may be used. More specifically, graphite, such as natural graphite and artificial graphite; carbon-based materials such as carbon black, acetylene black, ketjen black, channel black, furnace black, lamp black, summer black, and carbon fiber; metal powders or metal fibers such as copper, nickel, aluminum, and silver; needle-shaped or branched conductive whiskers such as zinc oxide whiskers, calcium carbonate whiskers, titanium dioxide whiskers, silicon oxide whiskers, silicon carbide whiskers, aluminum borate whiskers, magnesium borate whiskers, potassium titanate whiskers, silicon nitride whiskers, silicon carbide whiskers, and alumina whiskers; conductive metal oxides such as titanium oxide, or conductive polymers such as polyphenylene derivatives, and any one or a mixture of two or more thereof may be used.

In addition, the binder for the positive electrode may be any one or a mixture of two or more thereof selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP); and any one or a mixture of two or more thereof selected from the group consisting of N,N-bis[3-(triethoxysilyl)propyl]urea, polyethylene oxide (PEO), poly(vinylidene fluoride) (PVDF), poly(vinylidenfluoride-co-hexafluoropropylene) (PVDF-co-HFP), acrylonitrile-based styrene butadiene rubber (SBR), conjugated diene rubber latex such as acrylonitrile butadiene rubber (NBR), methyl methacrylate butadiene rubber (MBR), butadiene rubber (BR), carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, fluororubber, and various copolymers thereof.

In addition, the negative electrode may have a structure in which a negative electrode mixture layer containing a negative electrode active material is formed on a negative electrode current collector.

The negative electrode current collector is not particularly limited as long as it has high conductivity without causing a chemical change in the battery, and for example, stainless steel; copper; nickel; titanium; calcined carbon; or stainless steel surface-treated with carbon, nickel, titanium, silver, etc. may be included.

In addition, the negative electrode mixture layer contains a negative electrode active material, a conductive material, a binder, and a solid electrolyte, and in some cases may further contain an additive.

In this case, the negative electrode active material may be one selected from the group consisting of lithium metal, lithium alloys, lithium metal composite oxides, lithium-containing titanium composite oxide (LTO), and combinations thereof. Here, the lithium alloy may be an alloy consisting of lithium and at least one metal selected from Na, K, Rb, Cs, Fr, Be, Mg, Ca, Sr, Ba, Ra, Al, and Sn. In addition, the lithium metal composite oxide includes lithium and metal oxide (MeOₓ) of any one metal (Me) selected from the group consisting of Si, Sn, Zn, Mg, Cd, Ce, Ni and Fe, and for example, may be LiₓFe₂O₃(0<x≤1) or LiₓWO₂(0<x≤1).

In addition, as the negative electrode active material, metal composite oxides such as SnₓMe₁₋ₓMe'_{y}O_{z} (Me: Mn, Fe, Pb, Ge; Me': Al, B, P, Si, Group 1, 2, and 3 elements of the periodic table, halogens; 0< x≤1;1≤y≤3;1≤z≤8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅ may be used, and a carbon-based negative electrode active material such as crystalline carbon, amorphous carbon or a carbon composite material may be used alone or in combination of two or more.

In addition, as the conductive material, nickel powder, cobalt oxide, titanium oxide, carbon, and the like may be exemplified. As carbon, any one selected from the group consisting of ketjen black, acetylene black, furnace black, graphite, carbon fiber, and fullerenes, or one or more of these may be mentioned.

In addition, the binder for the negative electrode may be any one or a mixture of two or more thereof selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP); and any one or a mixture of two or more thereof selected from the group consisting of N,N-bis[3-(triethoxysilyl)propyl]urea, polyethylene oxide (PEO), poly(vinylidene fluoride) (PVDF), poly(vinylidenfluoride-co-hexafluoropropylene) (PVDF-co-HFP), styrene butadiene rubber (SBR), conjugated diene rubber latex such as acrylonitrile butadiene rubber (NBR), methyl methacrylate butadiene rubber (MBR), butadiene rubber (BR), carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, fluororubber, and various copolymers thereof.

Further, the solid electrolyte includes sulfide-based particles, and the sulfide-based particles may be typically used in the art as electrolytes for sulfide-based all-solid-state batteries, but specifically one or more amorphous solid electrolytes selected the group consisting of Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅ may be used.

The sulfide-based particles may have an average particle diameter of 0.1 µm to 50 µm, and specifically, an average particle diameter of 0.1 µm to 10 µm. According to the present invention, by controlling the average particle diameter of the sulfide-based particles constituting the solid electrolyte to the above range, the porosity of the solid electrolyte is increased, thereby improving the problem that the capacity of the battery is lowered.

### [Modes of the Invention]

Hereinafter, the present invention will be described in detail by way of Examples and Experimental Example.

However, the following Examples and Experimental Example are merely illustrative of the present invention, and the content of the present invention is not limited to the following Examples and Experimental Example.

### Examples 1-5 and Comparative Examples 1-6. Preparation of positive electrode active material for sulfide-based all-solid-state battery

As shown in Table 1 below, a metal sulfide (M²S) was introduced into a ball mill jar with respect to 100 parts by weight of LiNi_{0.8}Co_{0.1}Mn_{0.1}O₂ having an average particle size of 5±0.1 µm, and ball milling was performed with a force of 10 kWh/1 kg for 1 hour at a speed of 200±50 rpm to obtain a mixture in which LiNi_{0.8}Co_{0.1}Mn_{0.1}O₂ and the metal sulfide (M²S) were uniformly mixed.

After moving the mixture to an oven, it was heat-treated at 450±10 °C for 2 hours to obtain a positive electrode active material (average particle size: 5±0.1 µm) in which the metal sulfide (M²S) was uniformly coated on the surface of LiNi_{0.8}Co_{0.1}Mn_{0.1}O₂ as a core.

At this time, as shown in Table 1 below, when the content of the metal sulfide is less than 0.1 wt% based on the total weight of the lithium metal oxide, it was confirmed that the surface of LiNi_{0.8}Co_{0.1}Mn_{0.1}O₂ as a core could not be sufficiently coated; when the content of the metal sulfide exceeds 2 wt%, it was confirmed that the metal sulfide particles were agglomerated with each other in the mixture and were not uniformly adsorbed on the surface of LiNi_{0.8}Co_{0.1}Mn_{0.1}O₂.

**[Table 1]**

| | Metal sulfide (M²S) | | | Heat treatment gas condition | Adsorption area rate of M²S relative to core area |
|---|---|---|---|---|---|
| | Type | Average particle size | Content based on the total weight of the mixture | | |
| Example 1 | ZnS | 5 | 0.5 wt% | Ar gas | about 96% |
| Example 2 | ZnS | 10 | 0.5 wt% | Ar gas | about 92% |
| Example 3 | ZnS | 20 | 0.5 wt% | Ar gas | about 88% |
| Example 4 | ZnS | 10 | 0.3 wt% | Ar gas | about 86% |
| Example 5 | ZnS | 10 | 1.0 wt% | Ar gas | about 100% |
| Comparative Example 1 | B | 10 | 0.5 wt% | Ar gas | about 90% |
| Comparative Example 2 | LiNbO₂ | 10 | 0.5 wt% | Ar gas | about 90% |
| Comparative Example 3 | ZnS | 10 | 0.5 wt% | O₂ gas | about 90% |
| Comparative Example 4 | ZnS | 10 | 0.05 wt% | Ar gas | about 49% |
| Comparative Example 5 | ZnS | 10 | 3 wt% | Ar gas | about 57% |
| Comparative Example 6 | ZnS | 50 | 0.5 wt% | Ar gas | about 90% |

### Examples 6-10 and Comparative Examples 7-12. Manufacture of sulfide-based all-solid-state batteries

A sulfide-based all-solid-state battery was manufactured using each of the positive electrode active materials prepared in Examples 1 to 5 and Comparative Examples 1 to 6 above.

Specifically, the positive electrode active material: sulfide-based solid electrolyte (Li₂S-P₂S₅):conductive material (carbon black):binder (PVDF) prepared in each of Examples and Comparative Examples was mixed in a weight ratio of 80:15:3:2, and coated on an aluminum thin plate (thickness: 40 µm) and rolled at room temperature to prepare a positive electrode.

Separately, a lithium metal (Li) thin plate (thickness: 40 µm) was prepared as a negative electrode.

A solid electrolyte membrane (70 µm, 2.8×10⁻³ S/cm, Li₁₀SnP₂S₁₂) was interposed between the prepared positive electrode and negative electrode to manufacture a sulfide-based all-solid-state battery.

**[Table 2]**

| | Positive electrode active material used |
|---|---|
| Example 6 | Positive electrode active material of Example 1 |
| Example 7 | Positive electrode active material of Example 2 |
| Example 8 | Positive electrode active material of Example 3 |
| Example 9 | Positive electrode active material of Example 4 |
| Example 10 | Positive electrode active material of Example 5 |
| Comparative Example 7 | Positive electrode active material of Comparative Example 1 |
| Comparative Example 8 | Positive electrode active material of Comparative Example 2 |
| Comparative Example 9 | Positive electrode active material of Comparative Example 3 |
| Comparative Example 10 | Positive electrode active material of Comparative Example 4 |
| Comparative Example 11 | Positive electrode active material of Comparative Example 5 |
| Comparative Example 12 | Positive electrode active material of Comparative Example 6 |

### Experimental Example.

In order to evaluate the performance of the sulfide-based positive electrode active material for an all-solid-state battery according to the present invention, the following experiment was performed.

### A) Analysis of the cross-sectional structure of positive electrode mixture layer

Each of the sulfide-based all-solid-state batteries manufactured in Examples 6 to 10 and Comparative Examples 7 to 12 were prepared in a non-standby state, and their lifespan was advanced under the conditions of 3.0 to 4.25V and 0.1C at room temperature (25±1 °C), and then each battery was disassembled and a scanning electron microscope (SEM) analysis was performed on the mixture layer of the positive electrode.

As a result, it was confirmed that ZnS, a metal sulfide, was uniformly adsorbed on the surface of the lithium metal oxide (LiNi_{0.8}Co_{0.1}Mn_{0.1}O₂) as a core in the batteries of Examples according to the present invention. This means that the occurrence of cracks at the interface between the lithium metal oxide contained in the core and the sulfide-based solid electrolyte is reduced, and side reactions are suppressed.

On the other hand, in the batteries of Comparative Examples, it was confirmed that cracks occurred between the lithium metal oxide (LiNi_{0.8}Co_{0.1}Mn_{0.1}O₂) as a core and a sulfide-based solid electrolyte.

From these results, the positive electrode active material of the sulfide-based all-solid-state battery according to the present invention has a structure in which a shell containing metal sulfide particles having a specific size in a specific content is adsorbed on the surface of the core containing a lithium metal oxide, so that it can be seen that cracks and side reactions are prevented from occurring between the lithium metal oxide of the core and the solid electrolyte.

### B) Performance evaluation of initial charging/discharging

Each of the sulfide-based all-solid batteries manufactured in Examples 6 to 10 and Comparative Examples 7 to 12 was fixed to a jig inside a chamber at 60° C, and initial charging and discharging were performed under a condition of 0.1 C to measure the initial charging-discharging capacity and efficiency. At this time, the charging was performed in a constant current charging (CCC) mode, c/o was controlled to 0.5C, and the results are shown in Table 3 below.

**[Table 3]**

| | Initial charging capacity [mAh/g] | Initial discharging capacity [mAh/g] | Initial charging/di schargi ng efficiency [%] |
|---|---|---|---|
| Example 6 | 211 | 188 | 89 |
| Example 7 | 215 | 186 | 87 |
| Example 8 | 214 | 182 | 85 |
| Example 9 | 222 | 178 | 80 |
| Example 10 | 218 | 176 | 81 |
| Comparative Example 7 | 204 | 145 | 71 |
| Comparative Example 8 | 220 | 167 | 76 |
| Comparative Example 9 | 212 | 155 | 73 |
| Comparative Example 10 | 221 | 152 | 69 |
| Comparative Example 11 | 219 | 168 | 77 |
| Comparative Example 12 | 213 | 166 | 78 |

As shown in Table 3, since the positive electrode active material for a sulfide-based all-solid-state battery according to the present invention has a structure in which a shell containing metal sulfide particles having a specific size is adsorbed on the surface of a core containing a lithium metal oxide, it was confirmed that the mobility of lithium ions was improved and the charging and discharging capacity was high.

From these results, the positive electrode active material for a sulfide-based all-solid-state battery according to the present invention reduces the occurrence of cracks and side reactions at the interface between the positive electrode active material and the solid electrolyte and has excellent mobility of lithium ions, therefore it can be seen that high charge and discharge capacity can be realized.

While the foregoing has been described with reference to preferred embodiments of the present invention, it should be understood by those skilled in the art or by those of ordinary skill in the relevant art that various changes and modifications can be made therein without departing from the spirit and scope of the invention as set forth in the claims that follow.

Accordingly, the technical scope of the present invention should not be limited to the content described in the detailed description of the specification, but should be defined by the claims.

## Claims

1. A positive electrode active material for an all-solid-state battery, the positive electrode active material including:
a core containing a lithium metal oxide represented by the following Chemical Formula 1; and
a shell adsorbed on a surface of the core and including metal sulfide particles having an average particle size of 0.1 nm to 40 nm:
[Chemical Formula 1] Liₓ[Ni_{y}Co_{z}Mn_{w}M¹ᵥ]Oᵤ
wherein,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

2. The positive electrode active material for an all-solid-state battery of claim 1, wherein the metal sulfide particles include a single metal sulfide containing Zn, Mn, Cu, Cr, Zr, Al or Ti.

3. The positive electrode active material for an all-solid-state battery of claim 1, wherein the metal sulfide particles are zinc sulfide (ZnS) particles.

4. The positive electrode active material for an all-solid-state battery of claim 1, wherein the metal sulfide particles are included in an amount of 0.1 to 2 wt% based on the total weight of the positive electrode active material.

5. The positive electrode active material for an all-solid-state battery of claim 1, wherein an average particle size of the positive electrode active material is 0.5 µm to 10 µm.

6. The positive electrode active material for an all-solid-state battery of claim 1, wherein the shell including the metal sulfide particles is adsorbed to an area of 60% or more based on the total area of the core.

7. A method of preparing a positive electrode active material for an all-solid-state battery, the method including:
preparing a mixture including a lithium metal oxide represented by the following Chemical Formula 1 and metal sulfide particles; and
heat-treating the mixture;
wherein the metal sulfide particles have an average particle size of 0.1 nm to 40 nm,
[Chemical Formula 1] Liₓ[Ni_{y}Co_{z}Mn_{w}M¹ᵥ]Oᵤ
wherein M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

8. The method of claim 7, wherein the mixture contains 0.1 to 2 wt% of the metal sulfide based on the total weight of the lithium metal oxide.

9. The method of claim 7, wherein the heat treatment is performed at 300 °C to 500 °C.

10. The method of claim 7, wherein the heat treatment is performed in the presence of one or more inert gases selected from the group consisting of nitrogen gas and argon gas.

11. An all-solid-state lithium secondary battery including:
a positive electrode including the positive electrode active material of claim 1;
a negative electrode; and
a sulfide-based solid electrolyte disposed between the positive electrode and the negative electrode.

12. The all-solid-state lithium secondary battery of claim 11, wherein the sulfide-based solid electrolyte includes one or more selected from the group consisting of Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅.
